# EUROPEAN PATENT APPLICATION

(11) **EP 3 367 324 A1**
(43) Date of publication of application: **29.08.2018**
(21) Application number: 16857758.3
(22) Date of filing: 19.10.2016
(51) Int. Cl.: G06Q 50/32, G06Q 10/10

(54) **SYSTEM AND METHOD FOR SECURELY PRINTING MAIL BY USING VIRTUAL ADDRESS**

(30) Priority: 21.10.2015 KR 20150146491
(71) Applicant: K Cloud Co., Ltd., Seoul 06221 (KR)
(72) Inventor: JO, Nam Seob, Seoul 06597 (KR); PARK, Chan Heui, Seoul 06597 (KR); KIM, Han Joo, Yongin-si Gyeonggi-do 16909 (KR); WOO, Kwang Su, Namyangju-si Gyeonggi-do 12207 (KR)
(74) Representative: Brann AB
(86) International application number: PCT/KR2016/011717
(87) International publication number: WO 2017/069500

(57) **Abstract**

The present invention relates to a system and a method for securely printing mail by using a virtual address. More specifically, a bank, a card company, an Internet shopping mall, a department store, and the like, with which a client makes transactions, receive and store client information, and provide the client information in a file format to a printing company such that the mail to be sent to the client is printed. Currently, files and the like provided to a printing company include client information as is, such that problems of client information leakage through the printing company, and the like, occur. In addition, there is an inconvenience of writing a long actual address on paper or inputting the same into a terminal in order provide client information to the company with which the client makes transactions. The present invention relates to the secure printing of mail, capable of: preventing a client information leakage problem, which can occur during a client information printing process as described above; and increasing convenience by allowing a long actual address to be replaced with a virtual address.

## Description

### [Technical Field]

The present invention relates to a system and method of securely printing mail using a virtual address. Banks, card companies, Internet shopping malls, department stores, etc., with which customers transact business or from which customers purchase goods, receive and store customer information and provide the customer information in the form of a file to a printing company in order to print mail which is to be sent to the customers. The file provided to the printing company includes the customer information so that the customer information may be leaked by the printing company. In addition, the customers experience the inconvenience of writing an actual full address on paper or inputting the actual full address to a terminal in order to provide the customer information. The present invention relates to secure printing of mail capable of preventing customer information from being leaked in a process of printing the customer information and increasing convenience by replacing an actual address of a long length with a virtual address.

### [Background Art]

Generally, as use of the Internet has explosively increased and the global economic system has been changed from industry economy to knowledge economy, an information asset has been recognized as an important asset.

Currently, companies have a significant amount of personal information and, in daily life, many incidents happen due to leakage of personal information.

The personal information may be endlessly copied and may be modified into various types according to a scheme of processing the information.

Accordingly, it is difficult to accurately identify where an asset to be protected is exactly present and how the asset is present. When an information asset is leaked due to copy of information, it is also difficult to immediately confirm the fact that the information has leaked.

The personal information may be leaked through a wide variety of routes.

There are so many routes to be monitored, including a file transfer protocol (FTP), email, a Trojan, a USB memory, a CD, and an output material. Therefore, it is realistically impossible to prevent the information from being leaked by substantially blocking all information leakage routes without interfering with business.

In addition to a systematic mechanical accident, information leakage occurs in close association with our daily life. In a modern society, customers provide their personal information to various companies (e.g., banks, credit card companies, Internet shopping malls, and department stores) that the customers transact business or purchase goods and the companies send various mail including bills, promotional materials, etc. to the customers. Each company not only stores personal information of the customers, especially, addresses, but also provides the personal information of the customers in the form of a file to printing companies to manufacture printed matter.

The printing companies are allowed to collect the personal information of the customers. However, the case in which the personal information of the customers is exposed and used for crime may occur. Particularly, exposure of personal information such as addresses and telephone numbers causes much damage including spam and illegal telemarketing.

In addition, in order to transact business, the customers write an actual full address on paper provided by a transaction company or input the address to a transaction company system through a customer terminal.

Accordingly, introduction of new technology capable of substantially preventing the personal information of the customers from being leaked, simplifying input of the personal information, and implementing an uncomplicated process is needed.

### [Disclosure]

### [Technical Problem]

Therefore, the present invention is directed to a system and method of securely printing mail using a virtual address that substantially obviate the above problems due to limitations and disadvantages of the related art. A first object of the present invention is to provide a system and method of securely printing mail using a virtual address, capable of preventing personal information from being leaked by providing a virtual address registered by a customer in a virtual address management means, rather than an actual address, to a customer transaction company and printing mail using the virtual address to prevent a mail printing company from collecting the personal information.

A second object of the present invention is to provide a system and method of securely printing mail using a virtual address, capable of providing convenience by preventing personal information from being externally exposed in a process of printing mail and by providing only a simple virtual address information, instead of actual full address information, to a transaction company when a customer provides address information to the transaction company.

### [Technical Solution]

To achieve these objects and other advantages and in accordance with the purpose of the invention, a system for securely printing mail using a virtual address includes:
a customer terminal 100 configured to display input page information on a screen upon receiving the input page information for registering a virtual address from a virtual address management means, provide personal information of a customer, actual address information, and desired virtual address information to the virtual address management means when the customer inputs the personal information of the customer, the actual address information, and the desired virtual address information on a corresponding input page, receive registered virtual address information from the virtual address management means, and provide the personal information of the customer including the virtual address information to a customer transaction company system;
the virtual address management means 200 configured to determine whether the desired virtual address information provided by the customer terminal is registrable information, match the virtual address information to the personal information of the customer and the actual address information and register and store the matched virtual address information in a virtual address database (DB) upon determining that the desired virtual address information is the registrable information, inform the customer terminal of the registered virtual address information, convert the virtual address information which is requested to be converted into the actual address information upon receiving a virtual address conversion request signal from the customer transaction company system, and provide the converted actual address information to the customer transaction company system;
the customer transaction company system 300 configured to acquire the personal information including the virtual address information from the customer terminal, display print list information on a system operated by the customer transaction company system upon occurrence of a print event of mail which is to be sent to the customer to cause a printing company system to check the displayed print list information, transmit the virtual address conversion request signal to the virtual address management means when the printing company system confirms the displayed print list information, generate mail print information by combining mail information with the actual address information provided by the virtual address management means according to a virtual address conversion request signal, and provide the generated mail print information to the printing company system; and
the printing company system 400 configured to check and confirm the print list information displayed on the system operated by the customer transaction company system and output the mail print information provided by the customer transaction company system through an output means.

### [Advantageous effects]

A system and method of securely printing mail using a virtual address according to the present invention can prevent personal information from being leaked by providing a virtual address registered by a customer in a virtual address management means, rather than an actual address, to a customer transaction company and printing mail using the virtual address to prevent a mail printing company from collecting the personal information.

The system and method of securely printing mail using a virtual address can provide convenience by preventing personal information from being externally exposed in a process of printing mail so as not to be used in crime and providing only a simple virtual address information without the need for a customer to provide actual full address information to a transaction company one by one.

### [Description of Drawings]

FIGS. 1 and 9 illustrate an entire construction of first and second embodiments of a system of securely printing mail using a virtual address according to the present invention.
FIG. 2 is a block diagram of a virtual address management means of a system for securely printing mail using a virtual address according to the present invention.
FIG. 3 is a block diagram of a customer transaction company system of a system for securely printing mail using a virtual address according to a first embodiment of the present invention.
FIG. 4 is a block diagram of a customer transaction company system of a system for securely printing mail using a virtual address according to a second embodiment of the present invention.
FIG. 5 illustrates an entire flow of a method of securely printing mail using a virtual address according to a first embodiment of the present invention. FIG. 6 illustrates a data flowchart.
FIG. 7 illustrates an entire flow of a method of securely printing mail using a virtual address according to a second embodiment of the present invention. FIG. 8 illustrates a data flowchart.

### [Best Mode]

The following disclosure illustrates only the principles of the present invention. Therefore, those skilled in the art may embody this invention in many alternate forms which are not clarified or illustrated herein but realize the principles of the invention and fall within the scope of the invention.

Further, it should be understood that, in principle, all conditional terms and embodiments used herein are clearly for the purpose of describing the concept of the invention and are not intended to be limiting of the particular embodiments and conditions of the invention set forth herein.

Block diagrams of the present specification should be understood as representing the concept of an exemplary circuit that embodies the principle of the present invention. Likewise, all flowcharts, state transition diagrams, and pseudocode should be understood as representing various processes that may be substantially represented on computer readable media and are performed by computers or processors irrespective of whether the computers or the processors are clearly shown.

In addition, the clear usage of a processor, a controller or a term presented as concept similar to the processor or the controller should not be interpreted as exclusive citation of hardware having an ability to execute software, but be understood as implicitly including digital signal processor (DSP) hardware, a read-only memory (ROM) for storing software, a random access memory (RAM), and a non-volatile memory without limitation. Other known and common hardware may also be included.

Means for solving the objects of the present invention are as follows.

A first embodiment of a system for securely printing mail using a virtual address according to the present invention is as follows.

The system for securely printing mail includes a customer terminal 100 for displaying input page information on a screen upon receiving the input page information for registering a virtual address from a virtual address management means, providing personal information of a customer, actual address information, and desired virtual address information to the virtual address management means when the customer inputs the customer's personal information, the actual address information, and the desired virtual address information on a corresponding input page, receiving registered virtual address information from the virtual address management means, and providing the personal information of the customer including the virtual address information to a customer transaction company system;
the virtual address management means 200 for determining whether the desired virtual address information provided by the customer terminal is registrable information, matching the virtual address information to the personal information of the customer and the actual address information and registering and storing the matched virtual address information in a virtual address database (DB) upon determining that the desired virtual address information is the registrable information, informing the customer terminal of the registered virtual address information, converting the virtual address information which is requested to be converted into the actual address information upon receiving a virtual address conversion request signal from the customer transaction company system, and providing the converted actual address information to the customer transaction company system;
the customer transaction company system 300 for acquiring the personal information including the virtual address information from the customer terminal, providing the conversion request signal for requesting that the virtual address information be converted into the actual address information to the virtual address management means, generating mail print information by combining mail information with the actual address information provided by the virtual address management means according to a conversion request, and providing the generated mail print information to a printing company system; and
the printing company system 400 for outputting the mail print information provided by the customer transaction company system through an output means.

A second embodiment of a system for securely printing mail using a virtual address according to the present invention is as follows.

The system for securely printing mail includes a customer terminal 100 for displaying input page information on a screen upon receiving the input page information for registering a virtual address from a virtual address management means, providing personal information of a customer, actual address information, and desired virtual address information to the virtual address management means when the customer inputs the personal information, the actual address information, and the desired virtual address information on a corresponding input page, receiving registered virtual address information from the virtual address management means, and providing the personal information of the customer including the virtual address information to a customer transaction company system;
the virtual address management means 200 for determining whether the desired virtual address information provided by the customer terminal is registrable information, matching the virtual address information to the personal information of the customer and the actual address information and registering and storing the matched virtual address information in a virtual address database (DB) upon determining that the desired virtual address information is the registrable information, informing the customer terminal of the registered virtual address information, converting the virtual address information which is requested to be converted into the actual address information upon receiving a virtual address conversion request signal from the customer transaction company system, and providing the converted actual address information to the customer transaction company system;
the customer transaction company system 300 for acquiring the personal information including the virtual address information from the customer terminal, displaying print list information on a system operated by the customer transaction company system upon occurrence of a print event of mail which is to be sent to the customer so that a printing company system may check the displayed print list information, transmitting the virtual address conversion request signal to the virtual address management means when the printing company system confirms the displayed print list information, generating mail print information by combining mail information with the actual address information provided by the virtual address management means according to a virtual address conversion request signal, and providing the generated mail print information to the printing company system; and
the printing company system 400 for checking and confirming the print list information displayed on the system operated by the customer transaction company system and outputting the mail print information provided by the customer transaction company system through an output means.

A first embodiment of a method of securely printing mail using a virtual address, operated by printing processing system, including the customer terminal 100, the virtual address management means 200, the customer transaction company system 300, and the printing company system 400, is as follows.

The method of securely printing mail includes a virtual address registration request operation S100 of inputting, through the customer terminal 100, personal information of a customer, actual address information, and virtual address information which is desired to be registered and requesting that the virtual address management means register the virtual address information;
a virtual address registration operation S200 of determining, by the virtual address management means 200, whether the virtual address information requested to be registered is registrable information, upon determining that the desired virtual address information is the registrable information, matching the virtual address information to the personal information of the customer and the actual address information, and registering and storing the matched virtual address information in a virtual address DB;
a customer information reception operation S300 of receiving, by the customer transaction company system, the personal information of the customer including the virtual address information from the customer terminal or a customer transaction company employee terminal;
a virtual address conversion request operation S400 of requesting, by the customer transaction company system, that the virtual address management means convert the virtual address information into the actual address information;
an actual address information provision operation S500 of converting, by the virtual address management means, the virtual address information requested to be converted into the actual address information and providing the converted actual address information to the customer transaction company system; and
a mail print information generation operation S600 of generating mail print information by combining mail information with the actual address information provided by the virtual address management means;
a mail print information transmission operation S700 of transmitting the mail print information generated by the customer transaction company system to the printing company system; and
a mail print information output operation S800 of outputting the mail print information through the output means of the printing company system.

A second embodiment of a method of securely printing mail using a virtual address, operated by a printing processing system including the customer terminal 100, the virtual address management means 200, the customer transaction company system 300, and the printing company system 400, is as follows.

The method of securely printing mail includes a virtual address registration request operation S100 of inputting, through the customer terminal 100, personal information of a customer, actual address information, and virtual address information which is desired to be registered and requesting that the virtual address management means register the virtual address information;
a virtual address registration operation S200 of determining, by the virtual address management means 200, whether the virtual address information requested to be registered is registrable information, upon determining that the desired virtual address information is the registrable information, matching the virtual address information to the personal information of the customer and the actual address information, and registering and storing the matched virtual address information in a virtual address DB;
a customer information reception operation S300 of receiving, by the customer transaction company system, the personal information of the customer including the virtual address information from the customer terminal or a customer transaction company employee terminal;
a print list information display operation S400 of displaying print list information on a system operated by the customer transaction company system upon occurrence of a print event of mail that the customer transaction company system is to transmit to the customer so that the printing company system may check the displayed print list information;
a print list information check and confirmation operation S500 of checking and confirming, by the printing company system, the print list information displayed on the system operated by the customer transaction company system,
a virtual address conversion request operation S600 of requesting, by the customer transaction company system, that the virtual address management means convert the virtual address information which is matched to the print list information into the actual address information when the printing company system checks the print list information;
an actual address information provision operation S700 of converting, by the virtual address management means, the virtual address information requested to be converted into the actual address information and providing the converted actual address information to the customer transaction company system; and
a mail print information generation operation S800 of generating mail print information by combining mail information with the actual address information provided by the virtual address management means;
a mail print information transmission operation S900 of transmitting the mail print information generated by the customer transaction company system to the printing company system; and
a mail print information output operation S1000 of outputting the mail print information through the output means of the printing company system.

Hereinbelow, the system and method of securely printing mail using the virtual address according to the present invention will be described in detail through embodiments.

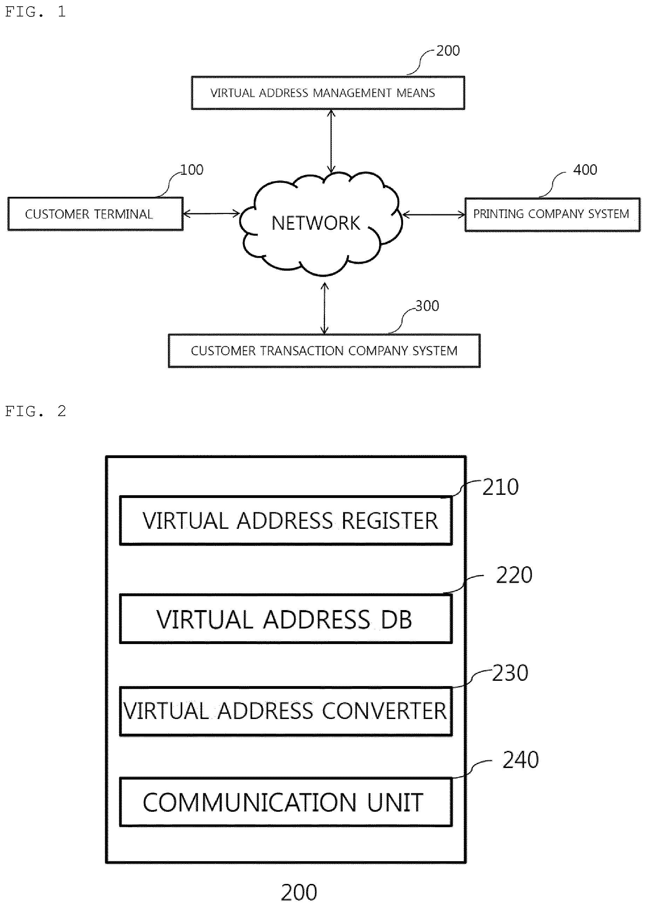

FIG. 1 illustrates an entire construction of first and second embodiments of a system for securely printing mail using a virtual address according to the present invention.

As illustrated in FIG. 1, the first and second embodiments of the system for securely printing mail using the virtual address according to the present invention include the customer terminal 100, the virtual address management means 200, the customer transaction company system 300, and the printing company system 400.

First, a process of registering the virtual address through the customer terminal 100 will now be described.

The customer terminal 100 is connected to the virtual address management means 200 through a wired and/or wireless communication network and receives input page information for registering the virtual address from the virtual address management means. The customer terminal displays the input page information on a screen to cause a customer to input personal information, actual address information, and desired virtual address information.

The personal information input by the customer may include basic information such as a social security number, a contact number, and a name. The actual address information indicates information about an actual address of the customer, for example, "1, Cheongwadae-ro, Jongno-gu, Seoul".

The desired virtual address represents virtual address information for replacing the actual address.

For example, if the customer selects "Cheongwadae" as the virtual address information and "Cheongwadae" is registered as the virtual address information, the customer may use "Cheongwadae" as the virtual address thereof instead of the actual address thereof ("1, Cheongwadae-ro, Jongno-gu, Seoul").

As described above, the customer may provide the actual address information and the desired virtual address information to the virtual address management means through the customer terminal, so that the virtual address for replacing the actual address is registered.

The present invention is characterized in that the registered virtual address, instead of the actual address of the customer, is used to process secure printing of mail.

Generally, the customer receives numerous pieces of mail from transaction companies (e.g., credit card companies, banks, and shopping malls). A transaction company of the customer requests that a printing company manufacture mail and send the mail to the customer.

In this case, the transaction company of the customer provides the printing company with personal information of the customer, particularly, address information, needed to manufacture the mail. The printing company intensively collects the personal information of the customer. When such personal information is leaked, many side effects occur.

Therefore, the present invention protects the personal information of the customer by causing the customer information such as address information not to be stored in a storage means of the printing company and simultaneously performs a procedure of processing secure printing of the mail using a simple virtual address.

Next, a process of providing the personal information of the customer including the virtual address information to a transaction company of the customer through the customer terminal 100 will be described.

Herein, providing the personal information of the customer to the transaction company means that the personal information of the customer is provided to a transaction company system of the customer.

The customer may have numerous transaction companies, for example, banks, credit card companies, Internet shopping malls, and department stores. The customer receives numerous pieces of mail from the transaction companies thereof.

The customer provides the personal information thereof including virtual address information to the transaction companies thereof through online or offline methods.

The customer may provide the personal information thereof to the transaction companies online through the customer terminal or provide the personal information thereof to the transaction companies offline through customer transaction company employee terminals.

In the case of providing the personal information to a customer transaction company offline, if the customer provides the personal information to a transaction company employee, the transaction company employee inputs the personal information of the customer to a customer transaction company employee terminal.

The personal information of the customer includes name information and address information. Particularly, the address information of the customer is used when the transaction company sends mail to the customer.

That is, the customer provides the transaction company with the personal information including address information thereof online or offline and the transaction company acquires the personal information of the customer online or offline.

Conventionally, the customer has provided the transaction company with actual address information as the address information out of the personal information. In this case, the personal information such as the actual address information is externally exposed so that many side effects may occur.

However, according to the present invention, the address information provided by the customer to the transaction company is not actual address information but virtual address information. Then, the transaction company of the customer manufactures mail to be sent to the customer using the virtual address information.

For example, if the actual address of the customer is "1, Cheongwadae-ro, Jongno-gu, Seoul", and
if a virtual address registered by the customer through the virtual address management means is "Cheongwadae", address information which is to be provided by the customer to the transaction company is not the actual address information "1, Cheongwadae-ro, Jongno-gu, Seoul" but the virtual address information "Cheongwadae".

Meanwhile, the virtual address management means 200 includes a virtual address DB for storing the personal information including the actual address of the customer and the virtual address information matching the actual address information.

That is, the virtual address DB stores and manages the personal information of the customer including the actual address and the virtual address information provided by the customer based on a customer unique ID in order to identify customers in the form of a matching table.

The virtual address management means 200 determines whether desired virtual address information provided by the customer terminal is registrable information. Upon determining that the desired virtual address information is the registrable information, the virtual address management means 200 matches the virtual address information to the personal information of the customer and the actual address information and registers and stores the matched virtual address information in the virtual address DB. The virtual address management means 200 informs the customer terminal of the registered virtual address information. Upon receiving a virtual address conversion request signal from the customer transaction company system, the virtual address management means 200 converts the virtual address information which is requested to be converted into the actual address information and provides the converted actual address information to the customer transaction company system

Conversion of the virtual address information into the actual address information means that the actual address information matching the virtual address information is extracted from the virtual address DB 220.

That is, if the customer provides the personal information thereof, the actual address information, and the desired virtual address information through the customer terminal in order to register the virtual address, the virtual address management means determines whether the virtual address information desired to be registered is registrable.

Determination as to whether the desired virtual address information is registrable involves determining whether the same virtual address information as the requested virtual address information has been registered.

For example, if someone has registered "Cheongwadae" as a virtual address, the virtual address management means 200 determines that "Cheongwadae" cannot be used as the virtual address and if "Cheongwadae" has not registered as the virtual address, the virtual address management means 200 determines that "Cheongwadae" is registrable.

If the requested virtual address information has not been registered, the virtual address management means informs the customer terminal that the requested virtual address information is a usable virtual address and the customer provides the customer transaction company system with the registered virtual address online or offline so that the transaction company of the customer may use the virtual address to print mail.

It is apparent that the customer may access the virtual address management means to confirm a virtual address that the customer registers.

The system for securely printing mail using the virtual address according to the present invention may be divided into a first embodiment and a second embodiment depending on whether printing list information is displayed on a screen.

As described above, the customer terminal 100 and the virtual address management means 200 in the first embodiment have the same constructions as those in the second embodiment in the system for securely printing mail using the virtual address according to the present invention.

Hereinafter, the customer transaction company system 300 and the printing company system 400 having different constructions in the first and second embodiments will be described.

First, the first embodiment is described.

The customer transaction company system 300 acquires the personal information including the virtual address information from the customer through the customer terminal and provides a conversion request signal for requesting that the virtual address information be converted into the actual address information to the virtual address management means. The customer transaction company system 300 generates mail print information by combining mail information with the actual address information provided by the virtual address management means according to a conversion request and provides the generated mail print information to the printing company system 400.

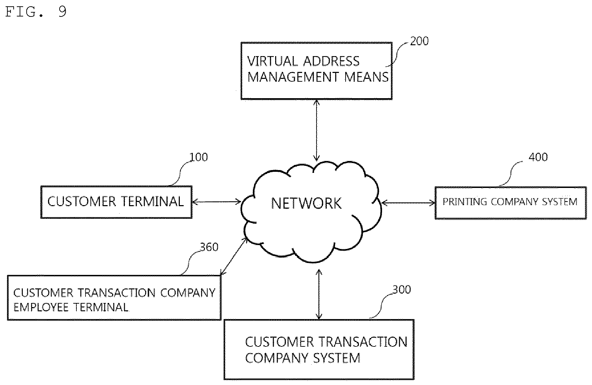

The customer transaction company system may acquire the personal information of the customer including virtual address information not only through the customer terminal 200 but also through the customer transaction company employee terminal 360 as illustrated in FIG. 9.

Upon acquiring the virtual address information of the customer, the customer transaction company system 300 requests that the virtual address management means convert the virtual address information into the actual address information.

Upon acquiring the actual address information from the virtual address management means, the customer transaction company system 300 generates the mail print information by combining the mail information with the acquired actual address information.

The mail information may vary according to characteristics of printed matter that the transaction company of the customer requests that the printing company print.

If printed matter to request the printing company is a detailed statement, the printed matter may be a credit card use statement with respect to a credit card company, a loan related statement with respect to a bank, and a goods purchase statement with respect to a shopping mall.

If printed matter that the transaction company of the customer requests that the printing company print is a mailing envelope, the mail information may include a company name and a customer name.

However, the present invention does not specify the mail information and any information is within the scope of the present invention as long as the mail information includes the contents of printed matter that the transaction company of the customer requests that the printing company print.

The printing company system 400 outputs the mail print information provided by the customer transaction company system through an output means.

The mail print information provided by the virtual address management means includes the actual address information of the customer for mail delivery.

The mail print information is output through the output means included in the printing company system. The mail print information may be configured to be output after the mail print information is stored in a storage means of the printing company system or may be configured to be simply output through the output means of the printing company system without being stored in the storage means of the printing company system.

However, it is desirable to simply output the mail print information through the output means of the printing company system without storing the mail print information in the storage means of the printing company system in order to prevent customer information from being collected through the printing company system.

Next, the second embodiment is described.

The customer transaction company system 300 acquires the personal information including the virtual address information from the customer terminal. Upon occurrence of a print event of mail which is to be sent to the customer, the customer transaction company system 300 displays print list information on a system managed thereby so that a printing company system may check the displayed print list information. When the printing company system checks the displayed print list information, the customer transaction company system 300 transmits a virtual address conversion request signal to the virtual address management means. The customer transaction company system 300 generates mail print information by combining mail information with the actual address information provided by the virtual address management means according to a virtual address conversion request signal and provides the generated mail print information to the printing company system.

The customer transaction company system may acquire the personal information of the customer including virtual address information not only through the customer terminal 200 but also through the customer transaction company employee terminal 360 as illustrated in FIG. 9.

In this case, the print event of the mail represents that mail needs to be sent by the customer transaction company to the customer.

The print list information represents mail print list information that the customer transaction company requests that the printing company print and includes the virtual address information.

In the above description, displaying the print list information on the system by the customer transaction company system may indicate that the print list information is displayed on a network such as an Internet site operated by the customer transaction company system. However, the present invention is not limited thereto and any display method capable of checking and confirming the print list information through access to the Internet or a wired and/or wireless communication network by the printing company system is within the scope of the present invention.

The printing company system 400 checks and confirms the print list information displayed on the system operated by the customer transaction company system and outputs the mail print information provided by the customer transaction company system through an output means.

That is, the printing company system checks and confirms the print information displayed on the system operated by the customer transaction company system. Herein, checking means that the printing company system monitors or checks what the print list information is and confirming means that the printing company system selects a print list desired to be printed among checked print lists. For example, when the print list information is displayed through an Internet site, the confirming method may be to click an icon added to a screen on which the print list is displayed. However, the present invention is not limited thereto and includes any scheme capable of confirming the print list information by the printing company system.

The printing company system 400 outputs the mail print information provided by the customer transaction company system through the output means.

The mail print information provided by the virtual address management means includes the actual address information of the customer for mail delivery. The mail print information including the actual address information of the customer may be configured to be simply output through the output means of the printing company system without being stored in the storage means of the printing company system in order to prevent customer information from being collected through the printing company system.

FIG. 2 is a block diagram of a virtual address management means of a system for securely printing mail using a virtual address according to first and second embodiments of the present invention.

As illustrated in FIG. 2, the virtual address management means 200 according to the first and second embodiments includes a virtual address register 210, a virtual address DB 220, a virtual address converter 230, and a communication unit 240.

The virtual address register 210 determines whether desired virtual address information is a registrable virtual address using customer information (e.g., personal information, actual address information, and desired virtual address information) provided by a customer terminal. If the desired virtual address information is the registrable virtual address, the virtual address register 210 registers and stores the desired virtual address information in the virtual address DB.

The virtual address register 210 informs the customer terminal through the communication unit 240 that requested virtual address information has been registered.

Determination as to whether the desired virtual address information is the registrable virtual address involves determining whether the same virtual address information as the requested virtual address information has been registered. If the same virtual address information as the requested virtual address information has been registered, the virtual address register 210 determines that the requested virtual address cannot be registered and, if not, the virtual address register 210 determines that the requested virtual address is registrable.

The virtual address DB 220 stores and manages the virtual address information determined to be registrable by the virtual address register in the form of a matching table corresponding to personal information-actual address information-virtual address information on a per-customer basis.

The virtual address converter 230 converts the virtual address information into the actual address information upon receiving a virtual address conversion request signal from the customer transaction company system and provides the converted actual address information to the customer transaction company system.

Conversion of the virtual address information into an actual address means that the actual address information matching the virtual address information is extracted using matching table information stored in the virtual address DB 220.

For example, if the virtual address information requested to be converted is "Cheongwadae", the virtual address converter 230 extracts the actual address information, i.e., "1, Cheongwadae-ro, Jongno-gu, Seoul" by searching for an actual address matching "Cheongwadae" through the virtual address DB.

The communication unit 240 is connected to the customer terminal and the customer transaction company system through a wired and/or wireless communication network and serves to transmit and receive information generated by the virtual address management means or an external request signal. The communication unit 240 transmits the extracted actual address information to the customer transaction company system.

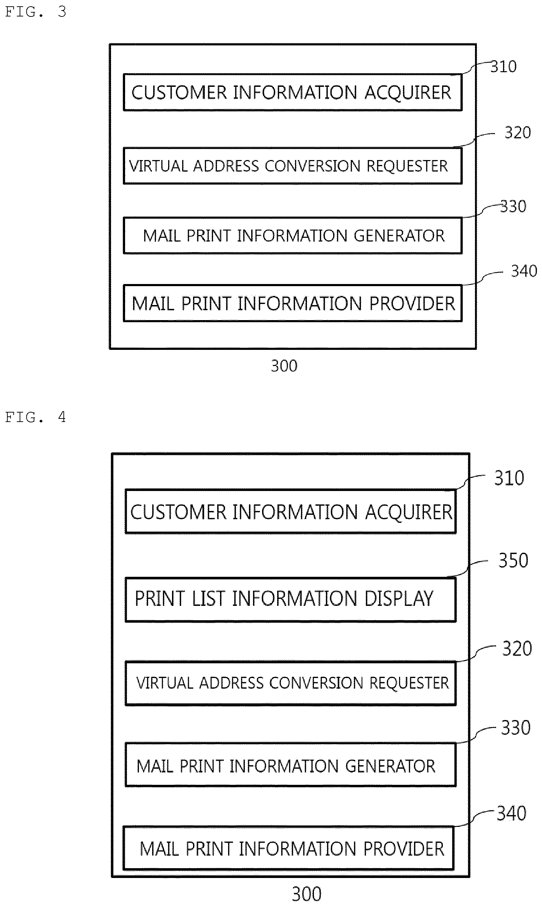

FIG. 3 is a block diagram of a customer transaction company system of a system for securely printing mail using a virtual address according to a first embodiment of the present invention.

As illustrated in FIG. 3, the customer transaction company system 300 may include a customer information acquirer 310, a virtual address conversion requester 320, a mail print information generator 330, and a mail print information provider 340.

The customer information acquirer 310 acquires personal information of a customer including virtual address information from a customer terminal 100 or a customer transaction company employee terminal 360.

The personal information of the customer may include name information and address information. In the present invention, the address information is a virtual address rather than actual address information.

The virtual address conversion requester 320 transmits a virtual address conversion request signal for converting the virtual address information acquired from the customer terminal or the customer transaction company employee terminal into actual address information to the virtual address management means.

Mail including only the virtual address cannot be sent to a customer. That is, in order to send mail to the customer, the actual address information of the customer is needed and the virtual address conversion requestor 330 requests that the virtual address management means having the actual address information of the customer transmit the actual address of the customer.

That is, the actual address information of the customer is managed not by various organizations but by only the virtual address management means so as to reduce a danger that the personal information of the customer such as the actual address is leaked.

The mail print information generator 330 generates mail print information by combining mail information with the actual address information provided by the virtual address management means.

The mail information may vary according to characteristics of printed matter that the transaction company of the customer requests that the printing company print.

If printed matter to request the printing company is a detailed statement, the printed matter may be a credit card use statement with respect to a credit card company, a loan related statement with respect to a bank, and a goods purchase statement with respect to a shopping mall.

If printed matter that the transaction company of the customer requests that the printing company print is a mailing envelope, the mail information may include a company name and a customer name.

However, the present invention does not specify the mail information and any information is within the scope of the present invention as long as the mail information includes the contents of printed matter that the transaction company of the customer requests that the printing company print.

The mail print information provider 340 provides the generated mail print information to the printing company system.

FIG. 4 is a block diagram of a customer transaction company system of a system for securely printing mail using a virtual address according to a second embodiment of the present invention.

As illustrated in FIG. 4, the customer transaction company system 300 includes a customer information acquirer 310, a print list information display 350, a virtual address conversion requester 320, a mail print information generator 330, and a mail print information provider 340.

The customer information acquirer 310 acquires personal information of a customer including virtual address information from a customer terminal or a customer transaction company employee terminal.

The personal information of the customer may include name information and address information. In the present invention, the address information is a virtual address rather than actual address information.

The print list information display 350 displays print list information on a system operated by the customer transaction company system so that the printing company system may check and confirm the print list information.

The print list information represents mail print list information that the customer transaction company requests that the printing company print and includes the virtual address information.

Displaying the print list information on the system by the print list information display may indicate displaying the print list information on a network such as an Internet site operated by the customer transaction company system. However, the present invention is not limited thereto and any display method capable of checking and confirming the print list information through access to the Internet or a wired and/or wireless communication network by the printing company system is within the scope of the present invention.

The virtual address conversion requester 320 transmits a virtual address conversion request signal for converting the virtual address information matching the print list information into actual address information to the virtual address management means when the printing company system confirms the print list information.

Mail including only the virtual address cannot be sent to a customer. That is, in order to send mail to the customer, the actual address information of the customer is needed and the virtual address conversion requestor 330 requests that the virtual address management means having the actual address information of the customer transmit the actual address of the customer.

The mail print information generator 330 generates mail print information by combining mail information with the actual address information provided by the virtual address management means.

The mail information may vary according to characteristics of printed matter that the transaction company of the customer requests that the printing company print.

If printed matter to request the printing company is a detailed statement, the printed matter may be a credit card use statement with respect to a credit card company, a loan related statement with respect to a bank, and a goods purchase statement with respect to a shopping mall.

If printed matter that the transaction company of the customer requests that the printing company print is a mailing envelope, the mail information may include a company name and a customer name.

However, the present invention does not specify the mail information and any information is within the scope of the present invention as long as the mail information includes the contents of printed matter that the transaction company of the customer requests that the printing company print.

The mail print information provider 340 provides the generated mail print information to the printing company system.

Meanwhile, the printing company system 400 may include an output means.

The printing company system 400 of the system for securely printing mail using the virtual address according to the first embodiment outputs the mail print information provided by the customer transaction company system through the output means.

When the mail print information is output, the mail print information may be configured to be output after the mail print information is stored in a storage means of the printing company system or may be configured to be simply output through the output means of the printing company system without being stored in the storage means of the printing company system.

However, it is desirable to simply output the mail print information through the output means of the printing company system without storing the mail print information in the storage means of the printing company system in order to prevent customer information from being collected through the printing company system.

The printing company system 400 of the system for securely printing mail using the virtual address according to the second embodiment monitors and confirms the print list information displayed on a system operated by the customer transaction company system.

Herein, checking means that the printing company system monitors or checks what the print list information is and confirming means that the printing company system selects a print list desired to be printed among checked print lists. For example, when the print list information is displayed through an Internet site, the confirming method may be to click an icon added to a screen on which the print list is displayed. However, the present invention is not limited thereto and includes any scheme capable of confirming the print list information by the printing company system.

The printing company system 400 outputs the mail print information provided by the customer transaction company system through the output means.

Herein, outputting the mail print information through the output means that the printing company system simply outputs the mail print information including the actual address information of the customer through the output means without storing the mail print information in the storage means of the printing company system in order to prevent customer information from being collected through the printing company system.

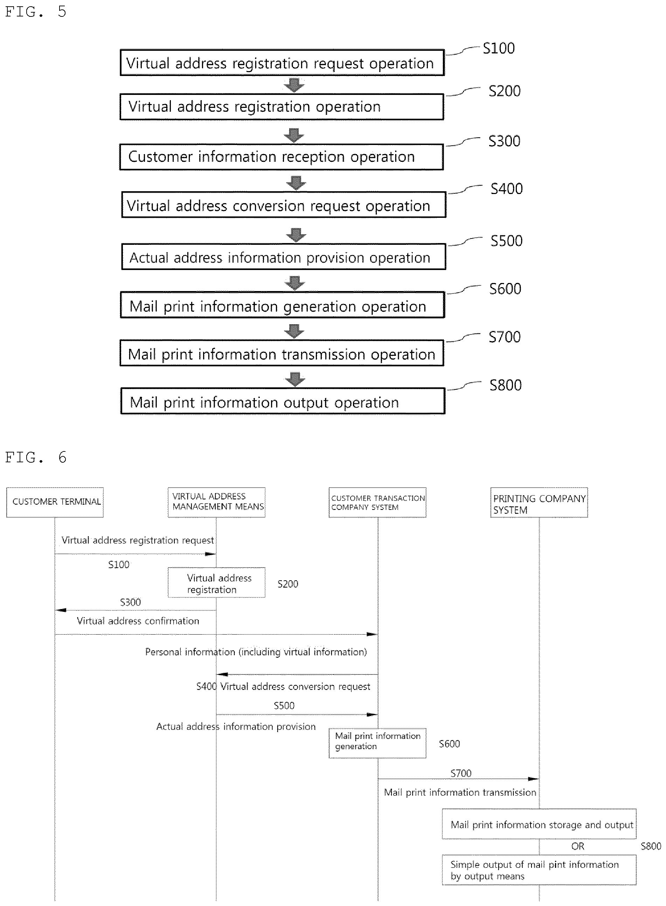

FIG. 5 illustrates an entire flow of a method of securely printing mail using a virtual address according to a first embodiment of the present invention. FIG. 6 illustrates a data flowchart.

As illustrated in FIGS. 5 and 6, the method of securely printing mail using the virtual address according to the first embodiment of the present invention includes a virtual address registration request operation S100, a virtual address registration operation S200, a customer information reception operation S300, a virtual address conversion request operation S400, an actual address information provision operation S500, a mail print information generation operation S600, a mail print information transmission operation S700, and a mail print information output operation S800.

The method of securely printing mail using the virtual address according to the first embodiment of the present invention will now be described in detail with reference to FIGS. 5 and 6.

The customer terminal 100 receives input page information for registering a virtual address from the virtual address management means 200.

The customer terminal 100 displays the input page information on a screen so that a customer inputs personal information, actual address information, and virtual address information desired to be registered on an input page.

The customer terminal 100 requests that the virtual address management means register a virtual address by providing the input information (the personal information, the actual address information, and the virtual address information desired to be registered) to the virtual address management means (S100).

The personal information out of the input information may include basic information such as a social security number, a contact number, and a name of the customer. The actual address information indicates information about an actual address of the customer, for example, "1, Cheongwadae-ro, Jongno-gu, Seoul". The desired virtual address represents virtual address information for replacing the actual address.

For example, if the customer selects "Cheongwadae" as the virtual address information and "Cheongwadae" is registered as the virtual address information, the customer may use "Cheongwadae" as the virtual address thereof instead of the actual address ("1, Cheongwadae-ro, Jongno-gu, Seoul").

The virtual address management means 200 determines whether the virtual address information requested to be registered is registrable information. If the virtual address information requested to be registered is registrable information, the virtual address management means 200 matches the virtual address information to the personal information of the customer and the actual address information and registers and stores the virtual address information in the virtual address DB in the form of a matching table corresponding to personal information-actual address information-virtual address information (S200).

Determination as to whether the virtual address information requested to be registered is the registrable information involves determining whether the same virtual address information as the requested virtual address information has been registered.

For example, if someone has registered "Cheongwadae" as a virtual address, the virtual address management means 200 determines that "Cheongwadae" cannot be used as the virtual address and if "Cheongwadae" has not been registered as the virtual address, the virtual address management means 200 determines that "Cheongwadae" is registrable.

If the requested virtual address information has not been registered, the virtual address management means informs the customer terminal that the requested virtual address information is a usable virtual address and the customer may use the requested virtual address for delivery service.

The customer transaction company system 300 receives the personal information of the customer including the virtual address from the customer terminal (S300).

The personal information of the customer necessarily includes the virtual address information and may include basic information such as a social security number, a contact number, and a name.

The customer transaction company system 300 may receive the personal information of the customer including the virtual address information from a customer transaction company employee terminal. In this case, the customer transaction company system 300 acquires the personal information from the customer offline and then receives the personal information of the customer which is input to the customer transaction company employee terminal.

The customer transaction company system 300 transmits a virtual address conversion request signal for requesting that the virtual address information acquired through the customer terminal or the customer transaction company employee terminal be converted into the actual address information to the virtual address management means 200 (S400).

Upon acquiring the virtual address conversion request signal, the virtual address management means 200 converts the virtual address information into the actual address information and provides the converted actual address information to the customer transaction company system (S500).

Conversion of the virtual address information into the actual address information means that the actual address information matching the virtual address information is extracted using matching table information stored in the virtual address DB.

For example, if the virtual address information requested to be converted is "Cheongwadae", the virtual address management means 200 extracts the actual address information, i.e., "1, Cheongwadae-ro, Jongno-gu, Seoul" by searching for an actual address matching "Cheongwadae" through the virtual address DB.

Upon receiving the actual address information, the customer transaction company system generates mail print information by combining mail information with the actual address information (S600) and transmits the generated mail print information to the printing company system (S700).

The mail information may vary according to characteristics of printed matter that the transaction company of the customer requests that the printing company print.

If printed matter to request the printing company is a detailed statement, the printed matter may be a credit card use statement with respect to a credit card company, a loan related statement with respect to a bank, and a goods purchase statement with respect to a shopping mall.

If printed matter that the transaction company of the customer requests that the printing company print is a mailing envelope, the mail information may include a company name and a customer name.

However, the present invention does not specify the mail information and any information is within the scope of the present invention as long as the mail information includes the contents of printed matter that the transaction company of the customer requests that the printing company print.

Upon receiving the mail print information, the printing company system outputs the mail print information through an output means (S800).

The mail print information is output through the output means included in the printing company system. The mail print information may be configured to be output after the mail print information is stored in a storage means of the printing company system or may be configured to be simply output through the output means of the printing company system without being stored in the storage means of the printing company system.

Herein, simply outputting the mail print information may mean that the mail print information is output through, for example, a printer which is the output means of the printing company system or may mean that the mail print information is simply displayed on a screen of a monitor.

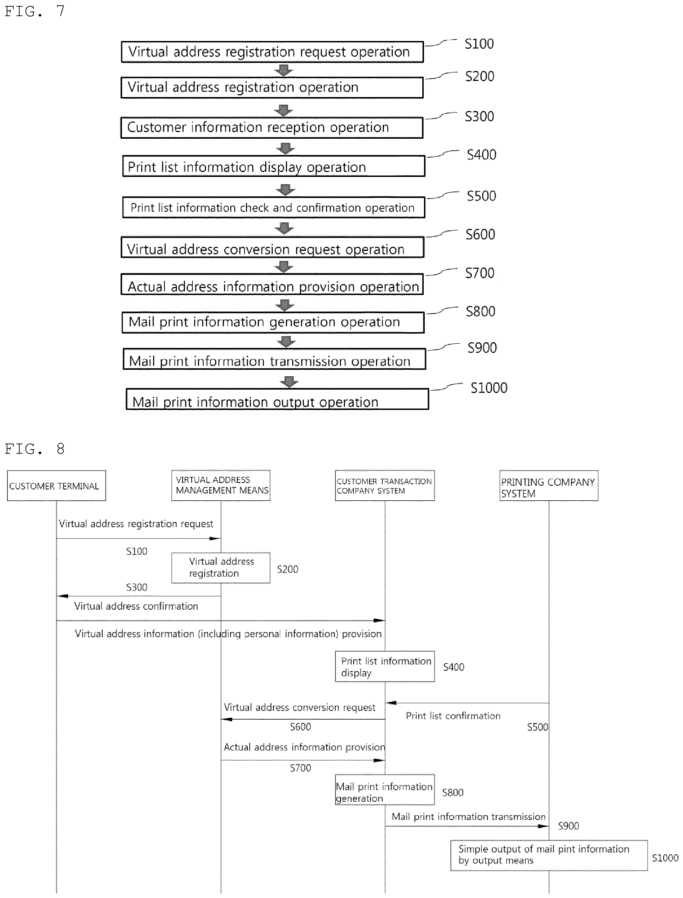

FIG. 7 illustrates an entire flow of a method of securely printing mail using a virtual address according to a second embodiment of the present invention. FIG. 8 illustrates a data flowchart.

As illustrated in FIGS. 7 and 8, the method of securely printing mail using the virtual address according to the second embodiment of the present invention includes a virtual address registration request operation S100, a virtual address registration operation S200, a customer information reception operation S300, a print list information display operation S400, a print list information check and confirmation operation S500, a virtual address conversion request operation S600, an actual address information provision operation S700, a mail print information generation operation S800, a mail print information transmission operation S900, and a mail print information output operation S1000.

The method of securely printing mail using the virtual address according to the second embodiment of the present invention will now be described in detail with reference to FIGS. 7 and 8.

The customer terminal 100 receives input page information for registering a virtual address from the virtual address management means 200.

The customer terminal 100 displays the input page information on a screen so that a customer can input personal information, actual address information, and virtual address information desired to be registered on an input page.

The customer terminal 100 requests that the virtual address management means register a virtual address by providing the input information (the personal information, the actual address information, and the virtual address information desired to be registered) to the virtual address management means (S100)

The personal information out of the input information may include basic information such as a social security number, a contact number, and a name of the customer. The actual address information indicates information about an actual address of the customer, for example, "1, Cheongwadae-ro, Jongno-gu, Seoul". The desired virtual address represents virtual address information for replacing the actual address.

For example, if the customer selects "Cheongwadae" as the virtual address information and "Cheongwadae" is registered as the virtual address information, the customer may use "Cheongwadae" as the virtual address thereof instead of the actual address ("1, Cheongwadae-ro, Jongno-gu, Seoul").

The virtual address management means 200 determines whether the virtual address information requested to be registered is registrable information. If the virtual address information requested to be registered is registrable information, the virtual address management means 200 matches the virtual address information to the personal information of the customer and the actual address information and registers and stores the virtual address information in the virtual address DB in the form of a matching table corresponding to personal information-actual address information-virtual address information (S200).

Determination as to whether the virtual address information requested to be registered is the registrable information involves determining whether the same virtual address information as the requested virtual address information has been registered.

For example, if someone has registered "Cheongwadae" as a virtual address, the virtual address management means 200 determines that "Cheongwadae" cannot be used as the virtual address and if "Cheongwadae" has not been registered as the virtual address, the virtual address management means 200 determines that "Cheongwadae" is registrable.

If the requested virtual address information has not been registered, the virtual address management means informs the customer terminal that the requested virtual address information is a usable virtual address and the customer may use the requested virtual address for delivery service.

The customer transaction company system 300 receives the personal information of the customer including the virtual address from the customer terminal (S300). The personal information of the customer necessarily includes the virtual address information and may include basic information such as a social security number, a contact number, and a name.

The customer transaction company system 300 may receive the personal information of the customer including the virtual address information from a customer transaction company employee terminal. In this case, the customer transaction company system 300 acquires the personal information from the customer offline and then receives the personal information of the customer which is input to the customer transaction company employee terminal.

Upon occurrence of a print event of mail which is to be sent to the customer , the customer transaction company system 300 displays print list information on a system operated by the customer transaction company system (S400)

In this case, the print event of the mail represents that mail needs to be sent by the customer transaction company to the customer.

The print list information represents mail print list information that the customer transaction company requests that the printing company print and includes the virtual address information.

In the above description, displaying the print list information on the system by the customer transaction company system may indicate that the print list information is displayed on a network such as an Internet site operated by the customer transaction company system. However, the present invention is not limited thereto and any display method capable of checking and confirming the print list information through access to the Internet or a wired and/or wireless communication network by the printing company system is within the scope of the present invention.

The printing company system 400 checks and confirms the print list information displayed on the system operated by the customer transaction company system (S500).

Herein, checking means that the printing company system monitors or checks what the print list information is and confirming means that the printing company system selects a print list desired to be printed among checked print lists. For example, when the print list information is displayed through an Internet site, the confirmation method may be to click an icon added to a screen on which the print list is displayed. However, the present invention is not limited thereto and includes any scheme capable of confirming the print list information by the printing company system.

When the printing company system confirms the print list information, the customer transaction company system transmits a virtual address conversion request signal for requesting that the virtual address information matching the confirmed print list information be converted into the actual address information to the virtual address management means (S600).

Upon acquiring the virtual address conversion request signal, the virtual address management means 200 converts the virtual address information into the actual address information and provides the converted actual address information to the customer transaction company system (S700).

Conversion of the virtual address information into the actual address information means that the actual address information matching the virtual address information is extracted using matching table information stored in the virtual address DB.

For example, if the virtual address information requested to be converted is "Cheongwadae", the virtual address management means 200 extracts the actual address information, i.e., "1, Cheongwadae-ro, Jongno-gu, Seoul" by searching for an actual address matching "Cheongwadae" through the virtual address DB.

Upon receiving the actual address information, the customer transaction company system generates mail print information by combining mail information with the actual address information (S800) and transmits the generated mail print information to the printing company system (S900).

The mail information may vary according to characteristics of printed matter that the transaction company of the customer requests that the printing company print.

If printed matter to request the printing company is a detailed statement, the printed matter may be a credit card use statement with respect to a credit card company, a loan related statement with respect to a bank, and a goods purchase statement with respect to a shopping mall.

If printed matter that the transaction company of the customer requests that the printing company print is a mailing envelope, the mail information may include a company name and a customer name.

However, the present invention does not specify the mail information and any information is within the scope of the present invention as long as the mail information includes the contents of printed matter that the transaction company of the customer requests the printing company print.

Upon receiving the mail print information, the printing company system outputs the mail print information through an output means (S1000).

The mail print information may be configured to be output through the output means of the printing company system without being stored in the storage means of the printing company system.

Herein, simply outputting the mail print information may mean that the mail print information is output through, for example, a printer which is the output means of the printing company system or may mean that the mail print information is simply displayed on a screen of a monitor.

That is, the mail print information may be configured to be simply output through the output means without being stored in the storage means of the printing company system in order to prevent customer information from being collected through the printing company system.

The customer terminal and the customer transaction company terminal according to the embodiments of the present invention may be any terminals which can perform voice communication or message communication such as a short message service (SMS) or a multimedia message service (MMS) with the virtual address management means or the customer transaction company system through a communication network and provide the personal information of the customer including the virtual address information by accessing the customer transaction company system through the communication network.

The method according to various embodiments of the present invention may be stored in a computer-readable medium in which a program executed by a computer is recorded. Examples of the computer-readable medium include a read only memory (ROM), a random access memory (RAM), a compact disc (CD)-ROM, a magnetic tape, a floppy disk, an optical data storage, and a carrier wave (e.g., data transmission over the Internet).

While the present invention has been particularly shown and described with reference to exemplary embodiments thereof, it will be understood by those of ordinary skill in the art that various changes in form and detail may be made herein without departing from the spirit and scope of the present invention as defined by the following claims and such modifications and variations should not be understood individually from the technical idea or aspect of the present invention.
100: Customer terminal
200: Virtual address management means
300: Customer transaction company system 360: Customer transaction company employee terminal
400: Print company system

## Claims

1. A system for securely printing mail using a virtual address, the system comprising:
a customer terminal(100) configured to display input page information on a screen upon receiving the input page information for registering a virtual address from a virtual address management means, provide personal information of a customer, actual address information, and desired virtual address information to the virtual address management means when the customer inputs the personal information of the customer, the actual address information, and the desired virtual address information on a corresponding input page, receive registered virtual address information from the virtual address management means, and provide the personal information of the customer including the virtual address information to a customer transaction company system;
the virtual address management means(200) configured to determine whether the desired virtual address information provided by the customer terminal is registrable information, match the virtual address information to the personal information of the customer and the actual address information and register and store the matched virtual address information in a virtual address database (DB) upon determining that the desired virtual address information is the registrable information, inform the customer terminal of the registered virtual address information, convert the virtual address information which is requested to be converted into the actual address information upon receiving a virtual address conversion request signal from the customer transaction company system, and provide the converted actual address information to the customer transaction company system;
the customer transaction company system(300) configured to acquire the personal information including the virtual address information from the customer terminal, provide the conversion request signal for requesting that the virtual address information be converted into the actual address information to the virtual address management means, generate mail print information by combining mail information with the actual address information provided by the virtual address management means according to a conversion request, and provide the generated mail print information to a printing company system; and
the printing company system (400) configured to output the mail print information provided by the customer transaction company system through an output means.

2. A system for securely printing mail using a virtual address, the system comprising:
a customer terminal (100) configured to display input page information on a screen upon receiving the input page information for registering a virtual address from a virtual address management means, provide personal information of a customer, actual address information, and desired virtual address information to the virtual address management means when the customer inputs the personal information of the customer, the actual address information, and the desired virtual address information on a corresponding input page, receive registered virtual address information from the virtual address management means, and provide the personal information of the customer including the virtual address information to a customer transaction company system;
the virtual address management means (200) configured to determine whether the desired virtual address information provided by the customer terminal is registrable information, match the virtual address information to the personal information of the customer and the actual address information and register and store the matched virtual address information in a virtual address database (DB) upon determining that the desired virtual address information is the registrable information, inform the customer terminal of the registered virtual address information, convert the virtual address information which is requested to be converted into the actual address information upon receiving a virtual address conversion request signal from the customer transaction company system, and provide the converted actual address information to the customer transaction company system;
the customer transaction company system (300) configured to acquire the personal information including the virtual address information from the customer terminal, display print list information on a system operated by the customer transaction company system upon occurrence of a print event of mail which is to be sent to the customer to cause a printing company system to check the displayed print list information, transmit the virtual address conversion request signal to the virtual address management means when the printing company system confirms the displayed print list information, generate mail print information by combining mail information with the actual address information provided by the virtual address management means according to a virtual address conversion request signal, and provide the generated mail print information to the printing company system; and
the printing company system (400) configured to check and confirm the print list information displayed on the system operated by the customer transaction company system and output the mail print information provided by the customer transaction company system through an output means.

3. The system of claim 1 or 2, wherein the virtual address management means (200) comprises:
a virtual address register (210) configured to determine whether the desired virtual address information is a registrable virtual address using customer information including the personal information, the actual address information, and the desired virtual address information provided by the customer terminal, register and store the desired virtual address information in the virtual address DB upon determining that the desired virtual address information is the registrable virtual address, and inform the customer terminal through a communication unit (240) that requested virtual address information has been registered;
a virtual address DB (220) configured to store and manage the virtual address information determined to be registrable by the virtual address register in the form of a matching table corresponding to personal information-actual address information-virtual address information on a per-customer basis;
a virtual address converter (230) configured to convert the virtual address information into the actual address information upon receiving a virtual address conversion request signal from the customer transaction company system and provide the converted actual address information to the customer transaction company system through the communication unit (240); and
the communication unit (240) connected to the customer terminal and the customer transaction company system through a wired and/or wireless communication network and configured to transmit and receive information generated by the virtual address management means or an external request signal and transmit the actual address information to the customer transaction company system.

4. The system of claim 1, wherein the customer transaction company system (300) comprises:
a customer information acquirer (310) configured to acquire the personal information of the customer including the virtual address information from the customer terminal;
a virtual address conversion requester (320) configured to transmit the virtual address conversion request signal for converting the virtual address information acquired from the customer terminal into the actual address information to the virtual address management means;
a mail print information generator (330) configured to generate the mail print information by combining the mail information with the actual address information provided by the virtual address management means; and
a mail print information provider (340) configured to provide the generated mail print information to the printing company system.

5. The system of claim 2, wherein the customer transaction company system (300) comprises:
a customer information acquirer (310) configured to acquire the personal information of the customer including the virtual address information from the customer terminal;
a print list information display (350) configured to display the print list information on the system operated by the customer transaction company system to cause the printing company system to check and confirm the print list information;
a virtual address conversion requester (320) configured to transmit the virtual address conversion request signal for converting the virtual address information matching the print list information into the actual address information to the virtual address management means when the printing company system confirms the print list information;
a mail print information generator (330) configured to generate the mail print information by combining the mail information with the actual address information provided by the virtual address management means.
a mail print information provider (340) configured to provide the generated mail print information to the printing company system.

6. A method of securely printing mail using a virtual address, the method comprising:
a virtual address registration request operation (S100) of inputting, through a customer terminal (100), personal information of a customer, actual address information, and virtual address information which is desired to be registered and requesting that a virtual address management means register the virtual address information;
a virtual address registration operation (S200) of determining, by the virtual address management means (200), whether the virtual address information requested to be registered is registrable information, upon determining that the desired virtual address information is the registrable information, matching the virtual address information to the personal information of the customer and the actual address information, and registering and storing the matched virtual address information in a virtual address database (DB);
a customer information reception operation (S300) of receiving, by a customer transaction company system, the personal information of the customer including the virtual address information from the customer terminal or a customer transaction company employee terminal;
a virtual address conversion request operation (S400) of requesting, by the customer transaction company system, that the virtual address management means convert the virtual address information into the actual address information;
an actual address information provision operation (S500) of converting, by the virtual address management means, the virtual address information requested to be converted into the actual address information and providing the converted actual address information to the customer transaction company system; and
a mail print information generation operation (S600) of generating mail print information by combining mail information with the actual address information provided by the virtual address management means;
a mail print information transmission operation (S700) of transmitting the mail print information generated by the customer transaction company system to a printing company system; and
a mail print information output operation (S800) of outputting the mail print information through an output means of the printing company system.

7. A method of securely printing mail using a virtual address, the method comprising:
a virtual address registration request operation (S100) of inputting, through a customer terminal (100), personal information of a customer, actual address information, and virtual address information which is desired to be registered and requesting that a virtual address management means register the virtual address information;
a virtual address registration operation (S200) of determining, by the virtual address management means (200), whether the virtual address information requested to be registered is registrable information, upon determining that the desired virtual address information is the registrable information, matching the virtual address information to the personal information of the customer and the actual address information, and registering and storing the matched virtual address information in a virtual address database (DB);
a customer information reception operation (S300) of receiving, by a customer transaction company system, the personal information of the customer including the virtual address information from the customer terminal or a customer transaction company employee terminal;
a print list information display operation (S400) of displaying print list information on a system operated by the customer transaction company system upon occurrence of a print event of mail that the customer transaction company system is to transmit to the customer to cause a printing company system to check the displayed print list information;
a print list information check and confirmation operation (S500) of checking and confirming, by the printing company system, the print list information displayed on the system operated by the customer transaction company system,
a virtual address conversion request operation (S600) of requesting, by the customer transaction company system, that the virtual address management means convert the virtual address information which is matched to the print list information into the actual address information when the printing company system checks the print list information;
an actual address information provision operation (S700) of converting, by the virtual address management means, the virtual address information requested to be converted into the actual address information and providing the converted actual address information to the customer transaction company system; and
a mail print information generation operation (S800) of generating mail print information by combining mail information with the actual address information provided by the virtual address management means;
a mail print information transmission operation (S900) of transmitting the mail print information generated by the customer transaction company system to the printing company system; and
a mail print information output operation (S1000) of outputting the mail print information through an output means of the printing company system.

8. The system of claim 1 or 2, wherein the customer transaction company system (300) further comprises a customer transaction company employee terminal (360) and acquires the personal information of the customer including the virtual address information even from the customer transaction company employee terminal (360).

9. The method of claim 6 or 7, wherein the customer information reception operation (S300) comprises receiving the personal information of the customer including the virtual address information even from a customer transaction company employee terminal (360).
